# EUROPÄISCHE PATENTSCHRIFT

(11) **EP 3 701 340 B1**
(45) Veröffentlichungstag und Bekanntmachung des Hinweises auf die Patenterteilung: **22.03.2023**
(21) Anmeldenummer: 18780040.4
(22) Anmeldetag: 20.09.2018
(51) Int. Cl.: B25J 9/16, F16P 3/14, G05B 19/042

(54) **ÜBERWACHUNGSVORRICHTUNG, INDUSTRIEANLAGE, VERFAHREN ZUR ÜBERWACHUNG SOWIE COMPUTERPROGRAMM**
MONITORING DEVICE, INDUSTRIAL INSTALLATION, METHOD FOR MONITORING, AND COMPUTER PROGRAM
DISPOSITIF DE SURVEILLANCE, ÉQUIPEMENT INDUSTRIEL, PROCÉDÉ DE SURVEILLANCE ET PROGRAMME INFORMATIQUE

(30) Priorität: 24.10.2017 DE 102017218917
(43) Veröffentlichungstag der Anmeldung: 02.09.2020
(73) Patentinhaber: Robert Bosch GmbH, 70442 Stuttgart (DE)
(72) Erfinder: ALBRECHT, Andreas, 73733 Esslingen (DE); HENRICHS, Volker, 71638 Ludwigsburg (DE)
(86) Internationale Anmeldenummer: PCT/EP2018/075430
(87) Internationale Veröffentlichungsnummer: WO 2019/081135

(56) Entgegenhaltungen:
- DE-A1-102004 038 906
- US-A1- 2016 062 345

## Beschreibung

### Stand der Technik

Die Erfindung betrifft eine Überwachungsvorrichtung zur sicherheitstechnischen Überwachung einer Handhabungsvorrichtung, wobei die Handhabungsvorrichtung einen Sicherheitsbereich aufweist, wobei die Handhabungsvorrichtung einen sicheren Betriebszustand und einen Arbeitszustand aufweist, wobei die Handhabungsvorrichtung ausgebildet ist, im Arbeitszustand einen Handhabungsschritt durchzuführen. Mit einer ersten Sensoreinheit, einer zweiten Sensoreinheit und einem Auswertemodul, wobei die erste Sensoreinheit ausgebildet ist, einen Eintritt eines Objektes in den Sicherheitsbereich zu detektieren und als erste Sensordaten dem Auswertemodul bereitzustellen, wobei das Auswertemodul ausgebildet ist, basierend auf den ersten Sensordaten die Handhabungsvorrichtung anzusteuern, den sicheren Betriebszustand einzunehmen, sobald ein Eintritt in den Sicherheitsbereich detektiert wurde.

Die sichere Kollaboration zwischen Mensch und Robotersystemen in Industrieanwendungen erfordert eine störungsfreie und fehlerfreie Erkennung von Personen im Arbeitsraum des Roboters. Sobald eine Person den sicherheitsrelevanten Bereich des Roboters betritt, muss der Roboter in einen sicheren Zustand geschaltet werden. Dazu werden häufig für jede Anwendung entsprechende Lösungen eingerichtet und sicherheitstechnisch abgenommen. Solche Lösungen sind häufig störanfällig für Veränderungen der Anwendung und ihrer Umgebung bzw. ihrer Umgebungsbedingungen. Beispielsweise scannen einige solcher Lösungen die Umgebung nur in einer horizontalen Ebene, während andere auf Zutrittskontrollen mittels Lichtschranken basieren. Solche Lösungen müssen im Fehlerfall durch eine Fachkraft manuell zurückgesetzt und wieder eingeschaltet werden.

Die Druckschrift DE 10 2010 063 214 A1 beschreibt eine Sicherheitseinrichtung für eine Handhabungsvorrichtung. Die Handhabungsvorrichtung ist dabei beispielsweise als ein Industrieroboter ausgebildet. Die Sicherungseinrichtung umfasst eine erste Sensoreinheit zur Kollisionserkennung, wobei die erste Sensoreinheit einen ersten Erfassungsbereich aufweist. Ferner umfasst die Sicherheitseinrichtung eine zweite Sensoreinheit, wobei die zweite Sensoreinheit einen zweiten Erfassungsbereich aufweist. Der zweite Erfassungsbereich erfasst einen Bereich größeren Abstands von der Handhabungsvorrichtung. Die Steuereinrichtung kann die Handhabungsvorrichtung bei Detektion einer Kollision abschalten.

Die Druckschrift US 2016/062345 A1 beschreibt ein System, mit dem ein physischer Bereich für den Zutritt eines Menschen sicher gemacht werden kann. Ein Managementgerät kann eine Aktivitätsnachricht an die mobilen Antriebseinheiten (z.B. Roboter) senden und die mobilen Antriebseinheiten anweisen, eine Reihe von Aktivitäten durchzuführen. Wenn ein Mensch im physischen Bereich entdeckt wird, kann das Managementgerät das Senden des Aktivitätsbefehls stoppen. Wenn die mobilen Antriebseinheiten den Aktivitätsbefehl nicht erhalten, können die mobilen Antriebseinheiten die Ausführung des Aktivitätssatzes stoppen.

Die Druckschrift DE 10 2004 038906 A1 zeigt ein Verfahren zur Erfassung beweglicher Objekte in einer Überwachungseinrichtung mit einer berührungslos wirkenden Schutzeinrichtung und einer Auswerteeinheit, die ein Steuersignal abgibt, das abhängig ist von einem Objekt, das in ein einen Überwachungsbereich begrenzendes Schutzfeld der berührungslos wirkenden Schutzeinrichtung eindringt. Dabei wird ein Objekt mit einer aufgebrachten Marke vor dem Eintritt in den Überwachungsbereich von wenigstens einer kontaktlosen Erkennungseinrichtung identifiziert, und es werden Objektinformationen an die Auswerteeinheit übertragen. Die Überwachungseinrichtung überwacht, ob die im Schutzfeld befindlichen Objekte als diejenigen Objekte identifiziert werden, die als zulässig konfiguriert worden sind. In diesem Fall erfolgt keine Abschaltung der gefahrbringenden Bewegung. Falls ein anderes Objekt, z. B. eine Person, in des Schutzfeldes eintritt, führt dies zu einer sofortigen Abschaltung der gefahrbringenden Bewegung.

### Offenbarung der Erfindung

Im Rahmen der Erfindung wird eine Überwachungsvorrichtung mit den Merkmalen des Anspruchs 1, eine Industrieanlage mit der Überwachungsvorrichtung mit den Merkmalen des Anspruchs 12, ein Verfahren mit den Merkmalen des Anspruchs 13 und ein Computerprogramm mit den Merkmalen des Anspruchs 14 vorgeschlagen. Bevorzugte und/oder vorteilhafte Ausführungsformen der Erfindung ergeben sich aus den Unteransprüchen, der nachfolgenden Beschreibung sowie den beigefügten Figuren.

Erfindungsgemäß wird eine Überwachungsvorrichtung zur sicherheitstechnischen Überwachung einer Handhabungsvorrichtung vorgeschlagen. Vorzugsweise ist die Überwachungsvorrichtung datentechnisch mit der Handhabungsvorrichtung verbunden, beispielsweise mittels einer Funkverbindung oder einer Kabelverbindung.

Die Handhabungsvorrichtung weist einen Sicherheitsbereich auf. Insbesondere ist die Handhabungsvorrichtung in einem Überwachungsbereich angeordnet, wobei der Überwachungsbereich beispielsweise von einem Abschnitt einer Fabrikhalle, eines Fabrikationsraum oder einer Produktionsanlage gebildet ist. Die Handhabungsvorrichtung weist insbesondere einen Roboter auf und/oder wird von dem Roboter gebildet. Die Handhabungsvorrichtung ist zur Produktion, zur Bearbeitung, zur Translation oder zum Vermessen eines Handhabungsobjektes ausgebildet. Die Handhabungsvorrichtung weist einen sicheren Betriebszustand und einen Arbeitszustand auf. Der sichere Betriebszustand ist vorzugsweise durch einen personenungefährdenden Zustand gebildet und/oder charakterisiert. Beispielsweise ist die Handhabungsvorrichtung in dem sicheren Betriebszustand gestoppt, verlangsamt oder in einen ungefährlichen Zustand versetzt. Der Arbeitszustand ist vorzugsweise der Zustand, bei welchem die Handhabungsvorrichtung einen Produktions-, Arbeits- oder Vermessungsschritt durchführt. Die Handhabungsvorrichtung ist dabei ausgebildet, im Arbeitszustand den Handhabungsschritt durchzuführen. Der Handhabungsschritt ist beispielsweise ein Bearbeiten, ein Verarbeiten, ein Bewegen oder ein Vermessen des Handhabungsobjektes. Beispielsweise ist der Arbeitszustand durch einen bewegenden Roboter gekennzeichnet.

Die Überwachungsvorrichtung weist eine erste Sensoreinheit auf. Insbesondere kann die Überwachungsvorrichtung eine Mehrzahl an ersten Sensoreinheiten aufweisen, beispielsweise mehr als fünf erste Sensoreinheiten und im Speziellen mehr als zehn erste Sensoreinheiten. Die erste Sensoreinheit ist insbesondere ausgebildet, den Sicherheitsbereich und/oder den Überwachungsbereich sensorisch zu überwachen. Insbesondere wird von der ersten Sensoreinheit der gesamte Sicherheitsbereich sensorisch überwacht. Die erste Sensoreinheit kann ausgebildet sein, den Sicherheitsbereich akustisch, optisch oder anderweitig sensorisch zu überwachen.

Die erste Sensoreinheit ist ausgebildet, einen Eintritt eines Objektes in den Sicherheitsbereich zu detektieren und diesen Eintritt als Sensordaten dem Auswertemodul bereitzustellen. Als Eintritt des Objektes in den Sicherheitsbereich wird insbesondere verstanden, dass das Objekt in dem Sicherheitsbereich auftaucht und/oder detektiert wird, welches vorher nicht dort war und/oder nicht dort hingehört. Beispielsweise wird der Sicherheitsbereich von einer Außenkontur umgeben und/oder begrenzt, wobei die erste Sensoreinheit detektiert, wenn das Objekt die Außenkontur übertritt und in den Sicherheitsbereich eintritt, wobei eine solche Detektion als Eintritt des Objektes gewertet wird. Die ersten Sensordaten können kontinuierlich an das Auswertemodul bereitgestellt sein, alternativ sind die ersten Sensordaten dem Auswertemodul nur bereitgestellt, wenn der Eintritt des Objektes detektiert ist.

Die Überwachungsvorrichtung weist eine zweite Sensoreinheit auf. Die zweite Sensoreinheit ist zur Überwachung des Sicherheitsbereiches ausgebildet. Insbesondere ist die zweite Sensoreinheit zur akustischen, zur optischen und/oder anderweitigen sensorischen Überwachung des Sicherheitsbereiches ausgebildet. Vorzugsweise basieren die erste Sensoreinheit und die zweite Sensoreinheit auf einem unterschiedlichen Messprinzip. Insbesondere kann die Überwachungsvorrichtung eine Mehrzahl an zweiten Sensoreinheiten aufweisen, wobei die zweiten Sensoreinheiten auf einem gleichen Messprinzip basieren können oder auf unterschiedlichen Messprinzipien beruhen können. Die zweite Sensoreinheit kann insbesondere zusammen mit der ersten Sensoreinheit in einem gemeinsamen Gehäuse angeordnet sein. Die zweite Sensoreinheit ist ausgebildet, bei Eintritt des Objektes in den Sicherheitsbereich für das eingetretene Objekt Zusatzdaten zu bestimmen und dem Auswertemodul bereitzustellen. Dabei kann es vorgesehen sein, dass die zweite Sensoreinheit nur einen Teilabschnitt des Sicherheitsbereiches sensorisch überwacht und/oder auswertet, wobei dieser Teilabschnitt das eingetretene Objekt aufweist.

Das Auswertemodul ist ausgebildet, basierend auf den Zusatzdaten das Objekt als eine Person oder als eine Nichtperson zu klassifizieren. Dazu weist das Auswertemodul beispielsweise ein Regelwerk auf, wobei das Auswertemodul basierend auf dem Regelwerk die Klassifikation des eingetretenen Objektes als Person oder Nichtperson durchführen kann. Das Regelwerk kann beispielsweise charakteristische Eigenschaften einer Person aufweisen, welche mittels der zweiten Sensoreinheit detektiert werden können, wobei basierend auf diesen charakteristischen Eigenschaften die Zuordnung in Person oder Nichtperson erfolgen kann.

Das Auswertemodul ist ferner ausgebildet, basierend auf den Zusatzdaten die Handhabungsvorrichtung anzusteuern. Dabei ist es insbesondere vorgesehen, dass die Handhabungsvorrichtung von dem Auswertemodul zu einem Einnehmen des Arbeitszustandes angesteuert ist, wenn das Objekt als eine Nichtperson klassifiziert wurde. Ferner kann es vorgesehen sein, dass das Auswertemodul ausgebildet ist, die Handhabungsvorrichtungen zum Beibehalten des sicheren Betriebszustandes anzusteuern, wenn das Objekt als Person klassifiziert wurde.

Es ist eine Überlegung der Erfindung, eine Überwachungsvorrichtung bereitzustellen, welche einen effektiven Betrieb der Handhabungsvorrichtung ermöglicht. Insbesondere ist es Ziel der Überwachungsvorrichtung, einen Betrieb der Handhabungsvorrichtung zu ermöglichen, der wenig Ausfallzeiten umfasst und/oder insbesondere wenig Ausfallzeiten basierend auf Bewegungen durch Nichtpersonen im Sicherheitsbereich. Ferner ermöglicht die Überwachungsvorrichtung einen kostengünstigen Betrieb der Handhabungsvorrichtung, da zum Anlaufen und/oder erneuten Anfahren der Handhabungsvorrichtung kein besonderer Sicherheitsbeauftragter nötig ist.

Besonders bevorzugt ist es, dass die erste Sensoreinheit einen Sensor zur Bestimmung eines Ortes des Objektes aufweist. Als Ort ist insbesondere eine Koordinate im dreidimensionalen oder zweidimensionalen Raum zu verstehen, welche die absolute oder relative Position des eingetretenen Objektes im Sicherheitsbereich charakterisiert. Ferner kann es vorgesehen sein, dass die erste Sensoreinheit ausgebildet ist, eine Geschwindigkeit des Objektes zu bestimmen. Als Geschwindigkeit des Objektes wird insbesondere eine gerichtete Geschwindigkeit des Objektes verstanden, welche beispielsweise die Information trägt, ob das Objekt sich zu der Handhabungsvorrichtung hinbewegt oder von der Handhabungsvorrichtung wegbewegt, und damit aus dem Sicherheitsbereich hinaus. Insbesondere kann es vorgesehen sein, dass die erste Sensoreinheit ausgebildet ist, eine Kontur des Objektes und/oder Strukturmerkmale des Objektes zu bestimmen. Im Speziellen kann es auch vorgesehen sein, dass die erste Sensoreinheit ausgebildet ist, einen Abstand vom Objekt zur Handhabungsvorrichtung zu bestimmen. Bei dieser Ausgestaltung ist es insbesondere vorgesehen, dass die ersten Sensordaten den Ort des Objektes, die Geschwindigkeit des Objektes, die Kontur des Objektes und/oder den Abstand zwischen Objekt und Handhabungsvorrichtung umfassen.

Optional ist es vorgesehen, dass die erste Sensoreinheit eine 3D-Kamera oder zwei redundante 3D-Kameras mit unterschiedlichen Funktionsprinzipien umfasst, um sowohl Bild- als auch Tiefeninformationen der zu überwachenden Szene zu erfassen bzw. um die zu überwachende Szene 3-dimensional abzutasten. Beispielsweise kann es vorgesehen sein, dass die erste Sensoreinheit eine Stereokamera umfasst und/oder von einer Stereokamera gebildet ist. Die Stereokamera kann als eine Farbbildkamera oder als eine Schwarz-Weiß-Kamera ausgebildet sein. Besonders bevorzugt ist es, dass die Stereokamera eine RGB-D-Kamera ist. Dabei ist es insbesondere vorgesehen, dass die Stereokamera Objekte im Sicherheitsbereich dreidimensional abtastet. Ferner kann es vorgesehen sein, dass die erste Sensoreinheit von einer Stereokamera in Kombination mit einer schnellen Time-of-Flight-Kamera gebildet ist, so dass eine Redundanz aufgrund der unterschiedlichen Kamerafunktionsprinzipien entsteht.

Eine Ausgestaltung der Erfindung sieht vor, dass die zweite Sensoreinheit einen Sensor zur Bestimmung von Vitalsignalen umfasst. Dabei ist die zweite Sensoreinheit beispielsweise ausgebildet, eine Atmung, einen Herzschlag und/oder eine Körpertemperatur eines Menschen zu erfassen. Beispielsweise umfasst die zweite Sensoreinheit dazu einen Puls-Doppler-Radarsensor. Insbesondere kann die zweite Sensoreinheit ausgebildet sein, auch durch nicht metallische Hindernisse hindurch die Vitalsignale zu erfassen. Optional ist es vorgesehen, dass die zweite Sensoreinheit einen Temperaturprofilsensor umfasst. Der Temperaturprofilsensor (z.B. eine Wärmebildkamera) ist insbesondere ausgebildet, die Temperaturverteilung des Objektes zu bestimmen. Insbesondere ist der Temperaturprofilsensor ausgebildet, thermooptisch das eingetretene Objekt zu erfassen und/oder sichtbar zu machen. Dieser Ausgestaltung liegt die Überlegung zugrunde, eine Überwachungsvorrichtung bereitzustellen, welche besonders sicher den Eintritt von Personen detektieren und/oder ausschließen kann. Auch wenn eine eingetretene Person versucht, bewusst ganz still zu stehen, so sind mindestens seine Vitalfunktionen, beispielsweise die Atmung, insbesondere charakterisierbar durch typische Atemfrequenzen, nicht unterdrückbar.

Besonders bevorzugt ist es, dass die ersten Sensordaten auf einer ersten Detektionszeit basieren und die Zusatzdaten auf einer zweiten Detektionszeit basieren. Beispielsweise ist die erste Sensoreinheit ausgebildet, mindestens mit der ersten Detektionszeit zu detektieren, um Sensordaten bereitzustellen, wobei die zweite Sensoreinheit ausgebildet ist, mit der zweiten Detektionszeit zu detektieren, um die Zusatzdaten bereitzustellen. Die erste Detektionszeit ist vorzugsweise kleiner als die zweite Detektionszeit. Insbesondere ist die zweite Detektionszeit mindestens doppelt so groß wie die erste Detektionszeit, vorzugsweise mindestens zehn Mal so groß wie die erste Detektionszeit und im Speziellen ist die zweite Detektionszeit mindestens einhundert Mal so groß wie die erste Detektionszeit. Dieser Ausgestaltung liegt die Überlegung zugrunde, eine Person im Überwachungsbereich und/oder im Sicherheitsbereich sicher ausschließen zu können, wobei beispielsweise zur Detektion der Vitalfunktionen eine Mindestaufnahmezeit bzw. -auswertezeit nötig ist. Eine solche Mindestauswertezeit liegt beispielsweise bei fünfzehn bis sechzig Sekunden. Während Abschalten und/oder der Übergang in den sicheren Betriebszustand auf der kürzeren Detektionszeit basiert.

Eine Ausgestaltung der Erfindung sieht vor, dass die Detektion des Eintritts des Objektes in den Sicherheitsbereich auf einer Detektion einer Bewegung des Objektes basiert. Insbesondere kann die erste Sensoreinheit ausgebildet sein, zu detektieren, wenn keine Bewegung im Sicherheitsbereich mehr vorliegt und/oder wenn das eingetretene Objekt im Stillstand ist. Dabei ist die Auswerteeinrichtung vorzugsweise ausgebildet, die zweite Sensoreinheit zur Bereitstellung und/oder zur Aufnahme der Zusatzdaten anzusteuern und/oder zu starten, wenn die Bewegung des Objektes null ist und/oder keine Bewegung mehr im Sicherheitsbereich detektierbar ist. Dieser Ausgestaltung liegt die Überlegung zugrunde, die Auswertung von Zusatzdaten erst dann zu starten, wenn das eingetretene Objekt im Stillstand ist, sodass dieses auch entsprechend charakterisiert werden kann.

Besonders bevorzugt ist es, dass die erste Sensoreinheit und die zweite Sensoreinheit einen gemeinsamen Überwachungssensor bilden. Beispielsweise sind dazu erste Sensoreinheit und zweite Sensoreinheit in einem gemeinsamen Gehäuse angeordnet. Insbesondere kann es auch vorgesehen sein, dass die erste Sensoreinheit auch die zweite Sensoreinheit bildet, wobei dann die ersten Sensordaten und die Zusatzdaten gleichartig oder verschieden ausgebildet sein können. Dieser Ausgestaltung liegt die Überlegung zugrunde, eine kostengünstige Überwachungsvorrichtung bereitzustellen.

Eine Ausgestaltung der Erfindung sieht vor, dass die ersten Sensordaten als Bilddaten ausgebildet sind und Überwachungsbilder des Sicherheitsbereiches umfassen. Das Auswertemodul ist ausgebildet, die Überwachungsbilder in einen Hintergrund und einen Vordergrund zu segmentieren. Ferner ist das Auswertemodul insbesondere ausgebildet, den Vordergrund basierend auf den Zusatzdaten in Person und/oder Nichtperson zu klassifizieren. Im Speziellen kann es vorgesehen sein, dass die Bildsegmentation in Hintergrund und Vordergrund dazu genutzt wird, dass das Auswertemodul die Koordinaten des Vordergrunds bestimmt, um darauf basierend in den Zusatzdaten das Objekt als Person oder als Nichtperson zu klassifizieren.

Insbesondere kann es vorgesehen sein, dass zur Segmentierung in Vordergrund und Hintergrund trainierte Klassifikatoren verwendet werden, beispielsweise, dass das Auswertemodul als ein künstliches neuronales Netz ausgebildet ist. Dazu kann das künstliche neuronale Netz beispielsweise mittels Merkmalen, insbesondere Personenmerkmalen, Kopf-/Schulterpartie, Körperkonturmerkmalen, trainiert werden, um so eine Hintergrund-/Vordergrundsegmentierung durchführen zu können. Insbesondere kann das künstliche neuronale Netz auch ausgebildet sein, Merkmale zu lernen, um eine Unterscheidung in Person und Nichtperson mittels des Auswertemoduls treffen zu können. Dazu kann das künstliche neuronale Netz nicht nur die ersten Sensordaten der ersten Sensoreinheit nutzen, sondern gegebenenfalls auch die Zusatzdaten der zweiten Sensoreinheit verwenden.

Besonders bevorzugt ist es, dass der Sicherheitsbereich Ausschlussabschnitte aufweist. Insbesondere weist der Sicherheitsbereich mindestens einen Ausschlussabschnitt auf. Die Ausschlussabschnitte können Randbereiche sein oder Innenbereiche des Sicherheitsbereichs. Beispielsweise ist ein Ausschlussabschnitt ein Bereich des Sicherheitsabschnittes, in welchem sich Roboterarme bewegen oder in welchem der automatische Zu- und Abtransport des Handhabungsobjektes erfolgt. Zum Beispiel ist der Ausschlussabschnitt ein Förderband. Das Auswertemodul ist dabei vorzugsweise ausgebildet, den Ausschlussabschnitt bei der Klassifikation in Person und Nichtperson auszuschließen. Ferner kann es vorgesehen sein, dass das Auswertemodul ausgebildet ist, den Ausschlussbereich von der Detektion eines Eintritts des Objektes auszuschließen. Im Speziellen wird ein in den Ausschlussabschnitt eingetretenes Objekt automatisch als Nichtperson von dem Auswertemodul klassifiziert. Dieser Ausgestaltung liegt die Überlegung zugrunde, eine fehlerunanfällige Überwachungsvorrichtung mit wenigen Fehlalarmen bereitzustellen.

Optional ist es vorgesehen, dass die Handhabungsvorrichtung einen sich bei der Durchführung des Handhabungsschrittes bewegenden Bewegungsabschnitt aufweist. Beispielsweise ist der Bewegungsabschnitt ein Roboterarm. Die Bewegung des Bewegungsabschnittes ist von der Handhabungsvorrichtung als Bewegungsdaten bereitgestellt. Dabei umfassen die Bewegungsdaten den Pfad und/oder die Position des Bewegungsabschnitts im Sicherheitsbereich. Die Bewegungsdaten sind der Überwachungsvorrichtung bereitgestellt, insbesondere mittels einer Schnittstelle datentechnisch bereitgestellt. Das Auswertemodul ist dabei vorzugsweise ausgebildet, basierend auf den Bewegungsdaten den Bewegungsabschnitt bei der Klassifizierung in Person und Nichtperson auszuschließen. Insbesondere kann es auch vorgesehen sein, dass das Auswertemodul ausgebildet ist, basierend auf den Bewegungsdaten den Bewegungsabschnitt bei der Bestimmung eines Eintrittes des Objekts auszuschließen. Durch die Rückkopplung der Bewegung der Handhabungsvorrichtung kann eine besonders fehlalarmunempfindliche Überwachungsvorrichtung bereitgestellt werden.

Besonders bevorzugt ist es, dass der Sicherheitsbereich einen Vorwarnabschnitt und einen Gefahrenabschnitt aufweist. Der Gefahrenabschnitt ist insbesondere der näher an dem Bewegungsabschnitt und/oder der Handhabungsvorrichtung liegende Teil des Sicherheitsbereiches. Der Vorwarnabschnitt ist vorzugsweise der den Gefahrenabschnitt nach außen hin umgebende Abschnitt des Sicherheitsbereiches. Der sichere Betriebszustand kann in einen Stoppzustand und in einen Langsamzustand eingeteilt werden. Der Stoppzustand entspricht dabei einem völligen Stillstand der Handhabungsvorrichtung, der vom Steuerungssystem der Handhabungsvorrichtung sicher überwacht wird. Der Langsamzustand entspricht ferner vorzugsweise einem Zustand, bei dem die Bewegung des Bewegungsabschnittes stark verlangsamt ist und die Handhabungsvorrichtung so vorzugsweise ungefährlich für eine Person ist, sodass die Person beispielsweise ausweichen kann. Auch dieser Langsamzustand muss vom Steuerungssystem der Handhabungsvorrichtung sicher überwacht werden. Das Auswertemodul ist hierbei vorzugsweise ausgebildet, bei Eintritt des Objektes in den Vorwarnabschnitt die Handhabungsvorrichtung anzusteuern, den Langsamzustand einzunehmen. Ferner ist es dabei vorgesehen, dass das Auswertemodul bei Eintritt des Objektes in den Gefahrenabschnitt die Handhabungsvorrichtung ansteuert, den Stoppzustand einzunehmen. Dieser Ausgestaltung liegt die Überlegung zugrunde, bei Eintritt des Objektes in einen außenliegenden Bereich die Handhabungsvorrichtung in einen Vorwarnzustand zu versetzen und die Handhabungsvorrichtung erst dann vollkommen anzuhalten, wenn das Objekt den Gefahrenabschnitt erreicht und/oder betritt.

Einen weiteren Gegenstand der Erfindung bildet eine Industrieanlage. Die Industrieanlage umfasst eine Überwachungsvorrichtung wie vorher beschrieben und eine Handhabungsvorrichtung. Die Überwachungsvorrichtung ist mit der Handhabungsvorrichtung datentechnisch gekoppelt. Beispielsweise sind die Überwaschungsvorrichtung und die Handhabungsvorrichtung mittels einer Funkverbindung verbunden, alternativ sind diese mittels eines Datenkabels verbunden. Die Überwachungsvorrichtung ist dabei ausgebildet, bei Eintritt eines Objektes in den Sicherheitsbereich die Handhabungsvorrichtung in einen sicheren Betriebszustand zu bringen.

Einen weiteren Gegenstand der Erfindung bildet ein Verfahren zur sicherheitstechnischen Überwachung einer Handhabungsvorrichtung. Dabei wird die Handhabungsvorrichtung angesteuert, einen sicheren Betriebszustand einzunehmen, wenn von einer ersten Sensoreinheit detektiert wurde, dass ein Objekt einen Sicherheitsbereich betritt und/oder in diesen eintritt. Verfahrensgemäß ist es ferner vorgesehen, dass die Handhabungsvorrichtung angesteuert wird, in einen Arbeitszustand zu gehen, wenn das Objekt als Nichtperson klassifiziert wurde, insbesondere von dem sicheren Betriebszustand wieder in den Arbeitszustand zu gehen, wenn das Objekt als Nichtperson klassifiziert wurde, wobei die Klassifikation in Person und/oder Nichtperson auf Zusatzdaten basiert. Die Zusatzdaten sind insbesondere mittels einer zweiten Sensoreinheit aufgenommen. Der Übergang in den Arbeitszustand muss dabei nicht zwingend in einem Schritt erfolgen. Optional kann es vorgesehen sein, die Geschwindigkeit der Handhabungsvorrichtung vom sicheren Zustand aus stufenweise oder kontinuierlich zu steigern, bis der Arbeitszustand erreicht ist. Dabei wird der Sicherheitsbereich weiterhin kontinuierlich überwacht. Dieser Vorgehensweise liegt die Überlegung zugrunde, einen zusätzlichen zeitlichen Sicherheitspuffer zu schaffen. Überdies kann die Industrieanlage optional mit einer Warneinrichtung ausgestattet sein (z.B. eine Ampel oder ein akustisches Signal), mit deren Hilfe insbesondere der bevorstehende Übergang in den Arbeitszustand signalisiert wird (z.B. blinkende Ampel oder Warnton), um so ein zusätzliches Sicherheitsmerkmal zu schaffen.

Einen weiteren Gegenstand der Erfindung bildet ein Computerprogramm mit Programmmitteln, um alle Schritte des vorher beschriebenen Verfahrens durchzuführen, wenn das Programm auf einem Computer und/oder auf der Überwachungsvorrichtung ausgeführt wird.

Weitere Merkmale, Vorteile und Wirkungen der Erfindung ergeben sich aus der nachfolgenden Beschreibung bevorzugter Ausführungsbeispiele der Erfindung sowie aus den beigefügten Figuren. Dabei zeigen:
Figur 1 schematisch eine Industrieanlage;
Figur 2 schematisch eine perspektivische Draufsicht auf eine Industrieanlage;
Figur 3 ein Ablaufdiagramm des Verfahrens.

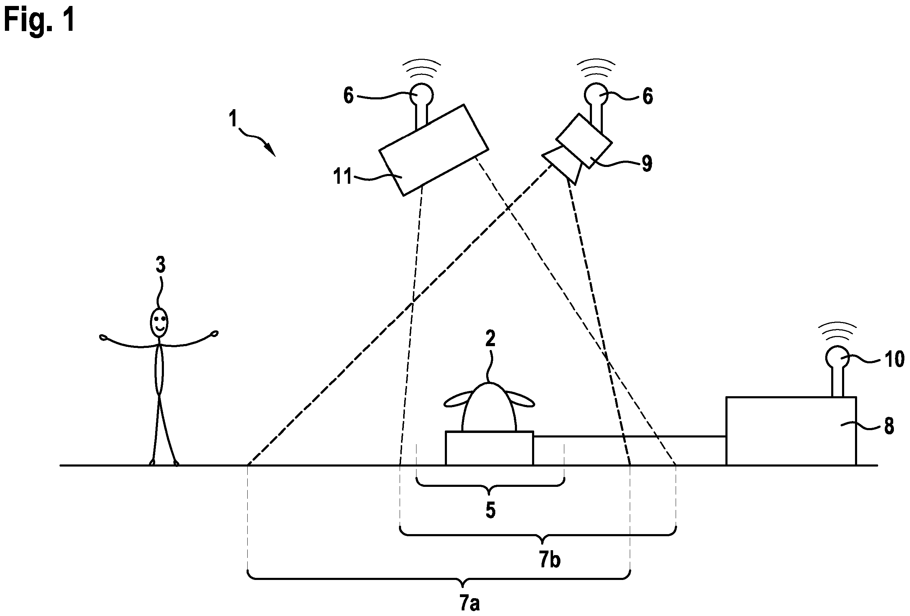

Figur 1 zeigt schematisch eine Industrieanlage 1 mit einer Überwachungsvorrichtung und einer Handhabungsvorrichtung 2 als ein Ausführungsbeispiel der Erfindung. Die Industrieanlage 1 ist beispielsweise Teil einer Fertigung oder Produktion. Insbesondere kann die Industrieanlage 1 auch Teil einer Fertigungsstrecke sein.

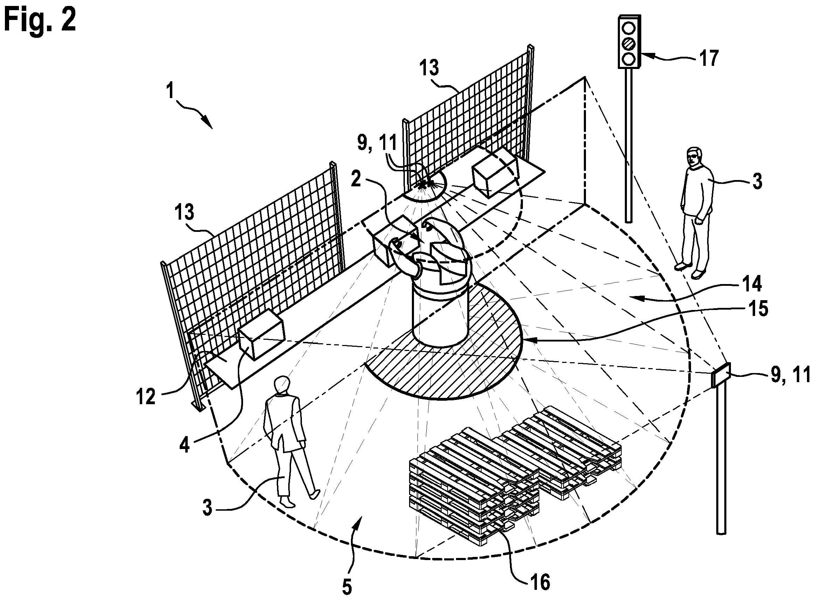

Die Handhabungsvorrichtung 2 ist beispielsweise ein Roboter. Die Handhabungsvorrichtung 2 ist zur Durchführung eines Arbeitsschrittes ausgebildet. Beispielsweise kann der Roboter ein Handhabungsobjekt 4 (Figur 2) transportieren, bearbeiten oder vermessen. Der Roboter weist Arme auf, wobei diese Arme in einem Bewegungsbereich beweglich sind und so eine potentielle Gefahr für einen Menschen darstellen können. Daher weist die Handhabungsvorrichtung 2 einen Sicherheitsbereich 5 auf. Der Sicherheitsbereich 5 ist ein 3-dimensionaler oder ein flächiger Bereich, in welchem sich keine Person aufhalten darf, wenn die Handhabungsvorrichtung 2 den Handhabungsschritt durchführen soll. Befindet sich eine Person 3 in dem Sicherheitsbereich 5, soll die Handhabungsvorrichtung 2 in einen sicheren Zustand schalten (z.B. sicher überwachter Stillstand / Stoppzustand oder sicher überwachter Langsamzustand).

Die Handhabungsvorrichtung 2 weist einen sicheren Betriebszustand und einen Arbeitszustand auf. Im Arbeitszustand führt die Handhabungsvorrichtung 2 den Handhabungsschritt aus und kann eine Gefahr für eine Person im Sicherheitsbereich 5 darstellen. Im sicheren Betriebszustand ist die Handhabungsvorrichtung 2 verlangsamt oder angehalten, sodass diese keine nennenswerte Gefahr für eine Person im Sicherheitsbereich 5 darstellt.

Die Überwachungsvorrichtung weist eine erste Sensoreinheit 9 auf. Diese erste Sensoreinheit 9 ist als 3D-Kamera ausgebildet, z.B. in Form einer Stereokamera ggf. auch in Kombination mit einer redundanten, schnellen Time-of-Flight-Kamera. Die erste Sensoreinheit 9 überwacht einen Überwachungsbereich 7a. Dieser Überwachungsbereich 7a umfasst den Sicherheitsbereich 5. Die erste Sensoreinheit ist ausgebildet, um das Eintreten eines Objektes in den Sicherheitsbereich 5 zu detektieren. Die erste Sensoreinheit stellt die zur Detektion notwendigen Detektionsdaten datentechnisch einem Auswertemodul 8 bereit. Dazu weist die erste Sensoreinheit 9 eine Schnittstelle 6 auf, wobei die Schnittstelle 6 in diesem Beispiel als eine Funkschnittstelle ausgebildet ist. Das Auswertemodul 8 weist eine Gegenschnittstelle 10 auf, wobei die Gegenschnittstelle 10 hier ebenfalls eine Funkschnittstelle ist und mit der Schnittstelle 6 gekoppelt werden kann. Auf diese Weise werden dem Auswertemodul 8 die ersten Sensordaten bereitgestellt.

Um zu bestimmen, ob ein Objekt den Sicherheitsbereich 5 betreten hat und/oder in ihn eingetreten ist, vergleicht die erste Sensoreinheit 9 beispielsweise zwei oder mehrere aufeinanderfolgende 3D-Bilder, welche mit der ersten Sensoreinheit 9 aufgenommen wurden. Das Auswertemodul 8 ist ausgebildet, die Handhabungsvorrichtung 2 anzusteuern, so dass diese in den sicheren Betriebszustand übergeht und/oder wechselt, wenn ein Objekt detektiert wurde, das den Sicherheitsbereich 5 betreten hat oder sich in diesem bewegt. Damit ist das Auswertemodul 8 ausgebildet, die Handhabungsvorrichtung 2 abzuschalten und/oder in einen sicheren Zustand zu versetzen, sobald ein bewegliches Objekt im Sicherheitsbereich 5 detektiert wird.

Die Überwachungsvorrichtung weist eine zweite Sensoreinheit 11 auf. Die zweite Sensoreinheit 11 ist zur sensorischen Überwachung eines Überwachungsbereiches 7b ausgebildet. Der Überwachungsbereich 7a und der Überwachungsbereich 7b weisen einen Überlapp auf, wobei dieser Überlapp den Sicherheitsbereich 5 enthält bzw. umfasst. Die zweite Sensoreinheit 11 ist beispielsweise eine Sensoreinheit zur Detektion von Vitalsignalen (Atmung, Herzschlag) einer Person, die sich im Überwachungsbereich 7b und/oder im Sicherheitsbereich 5 aufhält. Beispielsweise umfasst die zweite Sensoreinheit 11 einen einzelnen Puls-Doppler-Radarsensor oder ein ganzes Puls-Doppler-Radarsensorarray (bzw. eine Puls-Doppler-Radarsensormatrix mit mehreren Sender-Antennen-Paaren), um eine 3-dimensionale Erfassung von Objekten, ihrer räumlichen Ausdehnung und ihrer Bewegungen zu ermöglichen. Insbesondere kann die Überwachungsvorrichtung mehrere zweite Sensoreinheiten 11 und somit mehrere Puls-Doppler-Radarsensoren umfassen. Darüber hinaus kann die zweite Sensoreinheit 11 neben dem Radarsensor auch einen Temperaturprofilsensor (z.B. eine Wärmebildkamera) umfassen, um das Temperaturprofil einer Person, die sich im Überwachungsbereich 7b und/oder im Sicherheitsbereich 5 aufhält, zu erfassen.

Die zweite Sensoreinheit 11 ist ausgebildet, für ein Objekt, das den Sicherheitsbereich 5 betreten hat, Zusatzdaten zu bestimmen. Beispielsweise vermisst dazu die zweite Sensoreinheit 11 das eingetretene Objekt im Sicherheitsbereich 5. Die zweite Sensoreinheit 11 stellt diese Zusatzdaten dem Auswertemodul 8 bereit. Dazu umfasst die zweite Sensoreinheit 11 eine Schnittstelle 6, welche hier im Beispiel eine Funkschnittstelle ist, wobei diese Schnittstelle 6 mit der Gegenschnittstelle 10 zur Bereitstellung der Zusatzdaten koppelbar ist.

Das Auswertemodul 8 ist ausgebildet, basierend auf den Zusatzdaten zu entscheiden, ob das in den Sicherheitsbereich 5 eingetretene Objekt eine Person oder eine Nichtperson ist. Dazu klassifiziert das Auswertemodul 8 das eingetretene Objekt in eine Person 3 oder eine Nichtperson. Ferner ist das Auswertemodul 8 ausgebildet, bei einem Objekt, das als Nichtperson klassifiziert wurde, die Handhabungsvorrichtung 2 anzusteuern, den Arbeitszustand wieder einzunehmen. Das Auswertemodul 8 entscheidet somit, ob das Abschalten der Handhabungsvorrichtung 2 durch den Übergang in den sicheren Betriebszustand, eine richtige Entscheidung war, indem es prüft, ob das eingetretene Objekt schutzbedürftig ist und eine Person 3 darstellt.

Figur 2 zeigt schematisch eine perspektivische Draufsicht auf einen Bereich mit einer Industrieanlage 1. Die Industrieanlage 1 umfasst auch hier eine Handhabungsvorrichtung 2, welche in einem Sicherheitsbereich 5 angeordnet ist. Der Sicherheitsbereich 5 wird von drei ersten Sensoreinheiten 9 sensorisch überwacht. Der Sicherheitsbereich 5 bildet hier im Beispiel einen Halbkreis, wobei zwei Module der ersten Sensoreinheit 9 jeweils etwas mehr als einen Viertelkreis mit einem gewissen Überlapp ihrer Sensorsichtfelder überwachen. Diese beiden ersten Sensoreinheiten 9 sind z.B. an einem Pfosten oder an der Decke montiert, insbesondere zentral oberhalb der Handhabungsvorrichtung 2. Die dritte erste Sensoreinheit 9 betrachtet die Handhabungseinrichtung 2 mitsamt des Sicherheitsbereiches 5 von der gegenüberliegenden Seite aus, so dass einerseits Verdeckungen und Abschattungen (z.B. durch die Handhabungseinrichtung 2 selbst) vermieden werden und anderseits eine zusätzliche Redundanz durch einen weiteren Überlapp der Sensorsichtfelder entsteht.

Die Handhabungsvorrichtung 2 ist mittels eines Förderbandes 12 in eine größere Produktionsanlage integriert. Auf dem Förderband 12 werden die Handhabungsobjekte 4 transportiert. Auf der Rückseite ist der Zugang zur Handhabungsvorrichtung 2 und/oder zum Förderband 12 mittels passiver Absperrungen versperrt, wobei diese passiven Absperrungen hier im Beispiel als Absperrgitter 13 ausgebildet sind. Die Absperrgitter 13 verhindern den Zutritt zur Handhabungsvorrichtung 2 von der Rückseite her bzw. über das Förderband hinweg. Ein Zutritt zur Handhabungsvorrichtung 2 ist somit nur von der durch die ersten Sensoreinheiten 9 überwachten Seite aus bzw. über den Sicherheitsbereich 5 möglich. Der Sicherheitsbereich 5 stellt sich somit als halbkreisförmige Zone in der Ebene bzw. als halbzylinderförmige Zone im 3-dimensionalen Raum dar. Gegebenenfalls kann auf der Rückseite eine Öffnung im Absperrgitter vorgesehen sein, um den Zugang einer weiteren Handhabungseinrichtung von der Rückseite aus zum Förderband zu ermöglichen. Diese zweite Handhabungsvorrichtung muss dann für sich ebenfalls entsprechend abgesichert sein, um den Zutritt von Personen zur Handhabungsvorrichtung 2 und zum Sicherheitsbereich 5 von der Rückseite her zuverlässig zu verhindern.

Der Sicherheitsbereich 5 ist hier unterteilt in einen Vorwarnabschnitt 14 und einen Gefahrenabschnitt 15. Sowohl der Vorwarnabschnitt 14 als auch der Gefahrenabschnitt 15 bildet einen Halbkreis. Der Gefahrenabschnitt 15 weist einen kleineren Radius auf als der Vorwarnabschnitt 14. Der Vorwarnabschnitt 14 ist der Bereich, bei dem die Handhabungsvorrichtung 2 in einen Langsamzustand versetzt, aber noch nicht komplett angehalten werden muss. Erst bei Betreten des Gefahrenabschnitts 15 durch eine Person 3 muss die Handhabungsvorrichtung 2 in einen Stoppzustand übergehen, sodass eine Person 3 nicht gefährdet und/oder verletzt wird.

Die Module der ersten Sensoreinheit 9 umfassen hier auch jeweils eine zweite Sensoreinheit 11. Wie die ersten Sensoreinheiten 9 überwachen auch die zweiten Sensoreinheiten 11 den gesamten Sicherheitsbereich 5 aus unterschiedlichen Perspektiven. Die zweite Sensoreinheit 11 ist dabei als ein Temperaturprofilsensor ausgebildet, der die Temperaturverteilung des eingetretenen Objektes bestimmen kann. Insbesondere kann die zweite Sensoreinheit 11 exponierte Körperstellen, die nicht durch Kleidung verdeckt werden, wie zum Beispiel das Gesicht, deutlich detektieren und dem Auswertemodul 8 als Zusatzdaten bereitstellen. Neben dem Temperaturprofilsensor umfasst die zweite Sensoreinheit 11 auch ein Puls-Doppler-Radarsensorarray, mit dessen Hilfe ermittelt werden kann, ob ein in den Sicherheitsbereich 5 eingetretenes Objekt charakteristische Vitalsignale eines Menschen (z.B. Atmung und/oder Herzschlag) aufweist. Auch die Radarsignale werden dem Auswertemodul 8 als Zusatzdaten bereitgestellt. Das Auswertemodul 8 kann basierend auf dem Temperaturprofil und den Radarsignalen, die von den Zusatzdaten umfasst sind, bestimmen, ob es sich bei dem eingetretenen Objekt um eine Person 3 handelt oder um eine Nichtperson. Bei der Nichtperson kann es sich beispielsweise um Paletten 16 handeln, die zur Durchführung des Handhabungsschrittes benötigt werden. Dazu müssen beispielsweise regelmäßig neue Paletten 16 in den Sicherheitsbereich 5 gebracht und dort abgestellt werden.

Die Industrieanlage kann auch eine Warneinrichtung 17 aufweisen, wobei die Warneinrichtung 17 beispielsweise eine Ampelanlage ist. Die Warneinrichtung 17 kann mit dem Auswertemodul 8 verbunden sein, um Personen 3 anzuzeigen, ob sich eine Person 3 im Sicherheitsbereich 5, im Vorwarnabschnitt 14 oder im Gefahrenabschnitt 15 befindet. Beispielsweise zeigt die Warneinrichtung 17 grün an, wenn keine Person 3 im Sicherheitsbereich 5 ist, gelb an, wenn eine Person 3 im Vorwarnabschnitt 14 ist, und rot an, wenn eine Person 3 im Gefahrenabschnitt 15 ist. Die Warneinrichtung 17 kann überdies dazu genutzt werden, den Übergang der Handhabungsvorrichtung 2 in den Arbeitszustand anzuzeigen (z.B. durch Blinken des gelben Lichts), wenn die Überwachungsvorrichtung erkennt, dass sich keine Person mehr im Sicherheitsbereich 5 befindet.

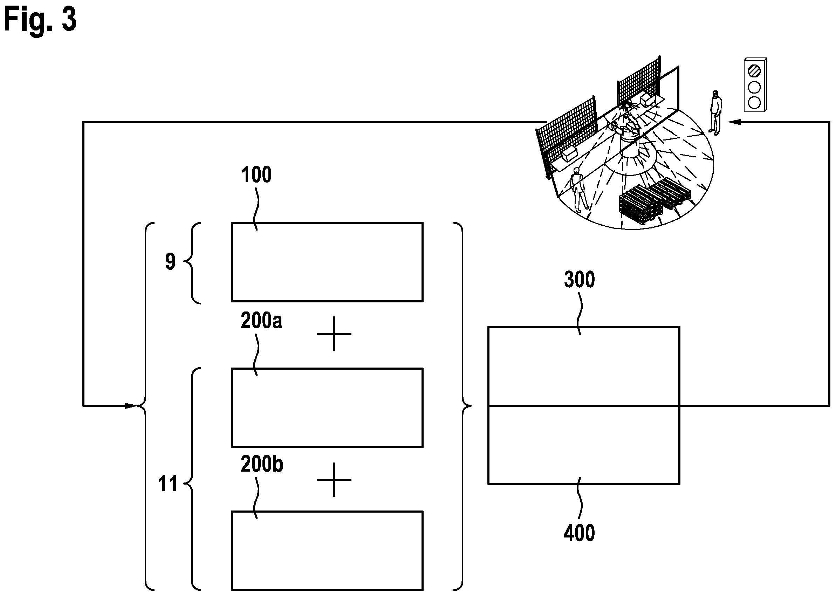

Figur 3 zeigt schematisch den Ablauf des Verfahrens zur sicherheitstechnischen Überwachung der Handhabungsvorrichtung 2 mit der Überwachungsvorrichtung als ein Ausführungsbeispiel des Verfahrens. Dabei werden von den einzelnen Sensoreinheiten sowohl erste Sensordaten als auch Zusatzdaten bereitgestellt. In einem Sensordatenbestimmungsschritt 100 wird mittels der ersten Sensoreinheit 9 der Sicherheitsbereich 5 sensorisch überwacht. Die erste Sensoreinheit 9 bildet dabei beispielsweise eine 3-Farbkamera bzw. eine RGB-D-Kamera, welche Bilddaten und Tiefeninformationen bereitstellt.

In einem Zusatzdatenbestimmungsschritt 200a und 200b werden Zusatzdaten zu dem in dem Sicherheitsbereich 5 eingetretenen Objekt bestimmt. Beispielsweise wird in dem Zusatzdatenbestimmungsschritt 200a mittels einer Wärmebildkamera das Temperaturprofil des eingetretenen Objektes bestimmt, während im Zusatzdatenbestimmungsschritt 200b mit Hilfe eines Puls-Doppler-Radarsensorarrays Atemfrequenz und/oder Herzschlagfrequenz des eingetretenen Objektes ermittelt werden.

In einem Auswerteschritt 300 wird mittels der ersten Sensordaten bestimmt, ob ein Objekt in den Sicherheitsbereich 5 eingetreten ist. Beim Eintreten eines Objekts in den Sicherheitsbereich 5 wird die Handhabungsvorrichtung 2 angesteuert, um in den sicheren Betriebszustand überzugehen. Wenn der Eintritt eines Objektes in den Sicherheitsbereich 5 detektiert wurde und die Handhabungsvorrichtung 2 in den sicheren Betriebszustand versetzt wurde, wird ferner in dem Auswerteschritt 300 basierend auf den Zusatzdaten bestimmt, ob das eingetretene Objekt eine Person 3 oder eine Nichtperson ist. Wird festgestellt, dass es sich bei dem eingetretenen Objekt um eine Person 3 handelt, so wird die Handhabungsvorrichtung 2 in dem sicheren Betriebszustand belassen, während wenn festgestellt wurde, dass das eingetretene Objekt eine Nichtperson ist, die Handhabungsvorrichtung 2 angesteuert wird, in den Arbeitszustand überzugehen. Der bevorstehende Übergang in den Arbeitszustand kann dabei mittels der Warneinrichtung 17 sichtbar angezeigt werden.

Ferner kann das Verfahren einen Erkennungsschritt 400 aufweisen, wobei in dem Erkennungsschritt 400 mittels einer künstlichen Intelligenz, beispielsweise einem neuronalen Netz, das Auswertemodul 8 trainiert wird, Personen von Nichtpersonen zu unterscheiden.

## Patentansprüche

1. Überwachungsvorrichtung zur sicherheitstechnischen Überwachung einer Handhabungsvorrichtung (2),
wobei die Handhabungsvorrichtung (2) einen Sicherheitsbereich (5) aufweist, wobei die Handhabungsvorrichtung (2) einen sicheren Betriebszustand und einen Arbeitszustand aufweist, wobei die Handhabungsvorrichtung (2) ausgebildet ist, im Arbeitszustand einen Handhabungsschritt durchzuführen,
mit einer ersten Sensoreinheit (9), einer zweiten Sensoreinheit (11) und einem Auswertemodul (8),
wobei die erste Sensoreinheit (9) ausgebildet ist, einen Eintritt eines Objektes in den Sicherheitsbereich (5) zu detektieren und als erste Sensordaten dem Auswertemodul (8) bereitzustellen,
wobei das Auswertemodul (8) ausgebildet ist, basierend auf den ersten Sensordaten die Handhabungsvorrichtung (2) anzusteuern, den sicheren Betriebszustand einzunehmen, sobald ein Eintritt in den Sicherheitsbereich (5) detektiert wurde,
**dadurch gekennzeichnet, dass**
die zweite Sensoreinheit (11) ausgebildet ist, den Sicherheitsbereich (5) sensorisch zu überwachen und bei Eintritt des Objektes in den Sicherheitsbereich (5) für das Objekt Zusatzdaten zu bestimmen und dem Auswertemodul (8) bereitzustellen,
wobei das Auswertemodul (8) ausgebildet ist, basierend auf den Zusatzdaten das Objekt als Person (3) oder als Nichtperson zu klassifizieren, wobei das Auswertemodul (8) ausgebildet ist, basierend auf den Zusatzdaten die Handhabungsvorrichtung (2) anzusteuern, den Arbeitszustand einzunehmen, wenn das Objekt als Nichtperson klassifiziert wurde.

2. Überwachungsvorrichtung nach Anspruch 1, **dadurch gekennzeichnet, dass** die erste Sensoreinheit (9) einen Sensor zur Bestimmung eines Ortes des Objekts, einer Geschwindigkeit des Objekts, einer Kontur des Objekts und/oder eines Abstandes von dem Objekt und der Handhabungsvorrichtung (2) umfasst.

3. Überwachungsvorrichtung nach Anspruch 1 oder 2, **dadurch gekennzeichnet, dass** die erste Sensoreinheit (9) eine 3D-Kamera umfasst, um Bild- und Tiefeninformationen des zu überwachenden Sicherheitsbereichs (5) zu erfassen.

4. Überwachungsvorrichtung nach einem der vorherigen Ansprüche, **dadurch gekennzeichnet, dass** die zweite Sensoreinheit (11) einen Sensor zur Bestimmung von Vitalsignalen des Objekts und/oder einen Temperaturprofilsensor umfasst.

5. Überwachungsvorrichtung nach einem der vorherigen Ansprüche, **dadurch gekennzeichnet, dass** die Sensordaten auf einer ersten Detektionszeit basieren und die Zusatzdaten auf einer zweiten Detektionszeit basieren, wobei die erste Detektionszeit kleiner ist als die zweite Detektionszeit.

6. Überwachungsvorrichtung nach einem der vorherigen Ansprüche, **dadurch gekennzeichnet, dass** die Detektion des Eintritts des Objektes in den Sicherheitsbereich (5) auf einer Detektion einer Bewegung des Objekts basiert, wobei die Auswerteeinrichtung (8) die zweite Sensoreinheit (11) zur Bereitstellung der Zusatzdaten ansteuert, wenn die Bewegung des Objektes Null ist.

7. Überwachungsvorrichtung nach einem der vorherigen Ansprüche, **dadurch gekennzeichnet, dass** die erste Sensoreinheit (9) und die zweite Sensoreinheit (11) einen gemeinsamen Überwachungssensor bilden.

8. Überwachungsvorrichtung nach einem der vorherigen Ansprüche, **dadurch gekennzeichnet, dass** die ersten Sensordaten als Bilddaten ausgebildet sind und Überwachungsbilder des Sicherheitsbereichs (5) umfassen, wobei das Auswertemodul (5) ausgebildet ist, die Überwachungsbilder in Hintergrund und Vordergrund zu segmentieren und den Vordergrund als Person (3) oder Nichtperson zu klassifizieren.

9. Überwachungsvorrichtung nach einem der vorherigen Ansprüche, **dadurch gekennzeichnet, dass** der Sicherheitsbereich (5) Ausschlussabschnitte aufweist, wobei das Auswertemodul (8) ausgebildet ist, ein in den Ausschlussabschnitt eingetretenes Objekt als Nichtperson zu klassifizieren.

10. Überwachungsvorrichtung nach einem der vorherigen Ansprüche, **dadurch gekennzeichnet, dass** die Handhabungsvorrichtung (2) einen sich bei Durchführung des Handhabungsschrittes bewegenden Bewegungsabschnitt aufweist, wobei die Bewegung des Bewegungsabschnittes von der Handhabungsvorrichtung (2) als Bewegungsdaten bereitgestellt ist, wobei die Überwachungsvorrichtung eine Schnittstelle zur Übernahme der Bewegungsdaten aufweist, wobei das Auswertemodul (8) ausgebildet ist, basierend auf den Bewegungsdaten den Bewegungsabschnitt als Nichtperson zu klassifizieren.

11. Überwachungsvorrichtung nach einem der vorherigen Ansprüche, **dadurch gekennzeichnet, dass** der Sicherheitsbereich (5) einen Vorwarnabschnitt (14) und einen Gefahrenabschnitt (15) aufweist, wobei der sichere Betriebszustand einen Stoppzustand und einen Langsamzustand aufweist, wobei das Auswertemodul (8) ausgebildet ist, bei Eintritt des Objektes in den Vorwarnabschnitt (14) die Handhabungsvorrichtung (2) anzusteuern, den Langsamzustand einzunehmen, und bei Eintritt des Objektes in den Gefahrenabschnitt (15), die Handhabungsvorrichtung (2) anzusteuern, den Stoppzustand einzunehmen.

12. Industrieanlage (1) mit der Überwachungsvorrichtung nach einem der vorherigen Ansprüche und der Handhabungsvorrichtung (2), **dadurch gekennzeichnet, dass** die Überwachungsvorrichtung ausgebildet ist, die Handhabungsvorrichtung (2) bei Eintritt eines Objektes in den sicheren Betriebszustand zu bringen.

13. Verfahren zur sicherheitstechnischen Überwachung einer Handhabungsvorrichtung (2), **dadurch gekennzeichnet, dass** die Handhabungsvorrichtung angesteuert wird, einen sicheren Betriebszustand einzunehmen, wenn von einer ersten Sensoreinheit detektiert wurde, dass ein Objekt in den Sicherheitsbereich eintritt, wobei die Handhabungsvorrichtung angesteuert wird, in einen Arbeitszustand zu gehen, wenn das Objekt als Nichtperson klassifiziert wurde, wobei die Klassifikation in Person und/oder Nichtperson auf Zusatzdaten basiert.

14. Computerprogramm mit Programmmitteln, um alle Schritte des Verfahrens nach Anspruch 13 durchzuführen, wenn das Programm auf einem Computer und/oder auf der Überwachungsvorrichtung nach einem der Ansprüche 1 bis 11 ausgeführt wird.

## Claims

1. Monitoring device for safety monitoring of a handling device (2),
the handling device (2) having a safety region (5), the handling device (2) having a safe operating state and a working state, the handling device (2) being configured to carry out a handling step in the working state,
comprising a first sensor unit (9), a second sensor unit (11) and an evaluation module (8),
the first sensor unit (9) being configured to detect an entry of an object into the safety region (5) and to provide same to the evaluation module (8) as first sensor data,
the evaluation module (8) being configured, on the basis of the first sensor data, to control the handling device (2) to adopt the safe operating state as soon as an entry into the safety region (5) has been detected,
**characterized in that**
the second sensor unit (11) is configured to monitor the safety region (5) by sensing and, upon entry of the object into the safety region (5), to determine additional data for the object and to provide same to the evaluation module (8),
the evaluation module (8) being configured, on the basis of the additional data, to classify the object as a person (3) or as a non-person, the evaluation module (8) being configured, on the basis of the additional data, to control the handling device (2) to adopt the working state if the object was classified as a non-person.

2. Monitoring device according to Claim 1, **characterized in that** the first sensor unit (9) comprises a sensor for determining a location of the object, a speed of the object, a contour of the object and/or a distance between the object and the handling device (2).

3. Monitoring device according to Claim 1 or 2, **characterized in that** the first sensor unit (9) comprises a 3D camera for capturing image and depth information of the safety region (5) to be monitored.

4. Monitoring device according to any of the preceding claims, **characterized in that** the second sensor unit (11) comprises a sensor for determining vital signals of the object and/or a temperature profile sensor.

5. Monitoring device according to any of the preceding claims, **characterized in that** the sensor data are based on a first detection time and the additional data are based on a second detection time, the first detection time being shorter than the second detection time.

6. Monitoring device according to any of the preceding claims, **characterized in that** the detection of the entry of the object into the safety region (5) is based on a detection of a movement of the object, the evaluation facility (8) controlling the second sensor unit (11) for providing the additional data if the movement of the object is zero.

7. Monitoring device according to any of the preceding claims, **characterized in that** the first sensor unit (9) and the second sensor unit (11) form a common monitoring sensor.

8. Monitoring device according to any of the preceding claims, **characterized in that** the first sensor data are configured as image data and comprise monitoring images of the safety region (5), the evaluation module (8) being configured to segment the monitoring images into background and foreground and to classify the foreground as a person (3) or a non-person.

9. Monitoring device according to any of the preceding claims, **characterized in that** the safety region (5) has exclusion sections, the evaluation module (8) being configured to classify an object that has entered the exclusion section as a non-person.

10. Monitoring device according to any of the preceding claims, **characterized in that** the handling device (2) has a movement section that moves when the handling step is carried out, the movement of the movement section being provided as movement data by the handling device (2), the monitoring device having an interface for accepting the movement data, the evaluation module (8) being configured, on the basis of the movement data, to classify the movement section as a non-person.

11. Monitoring device according to any of the preceding claims, **characterized in that** the safety region (5) has a prewarning section (14) and a hazard section (15), the safe operating state having a stop state and a slow state, the evaluation module (8) being configured, upon entry of the object into the prewarning section (14), to control the handling device (2) to adopt the slow state and, upon entry of the object into the hazard section (15), to control the handling device (2) to adopt the stop state.

12. Industrial installation (1) comprising the monitoring device according to any of the preceding claims and the handling device (2), **characterized in that** the monitoring device is configured to bring the handling device (2) to the safe operating state upon entry of an object.

13. Method for safety monitoring of a handling device (2), **characterized in that** the handling device is controlled to adopt a safe operating state if a first sensor unit has detected that an object has entered the safety region, the handling device being controlled to go to a working state if the object was classified as a non-person, the classification into person and/or non-person being based on additional data.

14. Computer program comprising program means for carrying out all the steps of the method according to Claim 13 when the program is executed on a computer and/or on the monitoring device according to any of Claims 1 to 11.

## Revendications

1. Dispositif de surveillance destiné à surveiller en termes de sécurité un dispositif de manutention (2),
le dispositif de manutention (2) comportant une zone de sécurité (5), le dispositif de manutention (2) comportant un état de fonctionnement sûr et un état de travail, le dispositif de manipulation (2) étant conçu pour effectuer une étape de manipulation à l'état de travail,
ledit dispositif de surveillance comprenant une première unité de détection (9), une deuxième unité de détection (11) et un module d'évaluation (8),
la première unité de détection (9) étant conçue pour détecter l'entrée d'un objet dans la zone de sécurité (5) et pour la fournir comme premières données de détection au module d'évaluation (8),
le module d'évaluation (8) étant conçu pour commander, sur la base des premières données de détection, le dispositif de manipulation (2) pour que celui-ci adopte l'état de fonctionnement sûr dès que l'entrée dans la zone de sécurité (5) a été détectée,
**caractérisé en ce que**
la deuxième unité de détection (11) est conçue pour surveiller la zone de sécurité (5) à l'aide de capteurs et déterminer, lorsque l'objet pénètre dans la zone de sécurité (5), des données supplémentaires pour l'objet et les fournir au module d'évaluation (8),
le module d'évaluation (8) étant conçu pour classer l'objet comme étant une personne (3) ou comme n'étant pas une personne sur la base des données supplémentaires, le module d'évaluation (8) étant conçu pour commander, sur la base des données supplémentaires, le dispositif de manipulation (2) pour que celui-ci adopte l'état de fonctionnement si l'objet a été classé comme n'étant pas une personne.

2. Dispositif de surveillance selon la revendication 1, **caractérisé en ce que** la première unité de détection (9) comprend un capteur destiné à déterminer une position de l'objet, une vitesse de l'objet, un contour de l'objet et/ou une distance entre l'objet et le dispositif de manutention (2).

3. Dispositif de surveillance selon la revendication 1 ou 2, **caractérisé en ce que** la première unité de capteur (9) comprend une caméra 3D destinée à capturer des informations d'image et de profondeur de la zone de sécurité (5) à surveiller.

4. Dispositif de surveillance selon l'une des revendications précédentes, **caractérisé en ce que** la deuxième unité de détection (11) comprend un capteur de détermination de signes vitaux de l'objet et/ou un capteur de profil de température.

5. Dispositif de surveillance selon l'une des revendications précédentes, **caractérisé en ce que** les données de détection sont basées sur un premier temps de détection et les données supplémentaires sont basées sur un deuxième temps de détection, le premier temps de détection étant inférieur au deuxième temps de détection.

6. Dispositif de surveillance selon l'une des revendications précédentes, **caractérisé en ce que** la détection de l'entrée de l'objet dans la zone de sécurité (5) est basée sur une détection d'un mouvement de l'objet, le dispositif d'évaluation (8) commandant la deuxième unité de détection (11) pour fournir les données supplémentaires lorsque le mouvement de l'objet est nul.

7. Dispositif de surveillance selon l'une des revendications précédentes, **caractérisé en ce que** la première unité de détection (9) et la deuxième unité de détection (11) forment un capteur de surveillance commun.

8. Dispositif de surveillance selon l'une des revendications précédentes, **caractérisé en ce que** les premières données de détection se présentent sous la forme de données d'image et comprennent des images de surveillance de la zone de sécurité (5), le module d'évaluation (5) étant conçu pour segmenter les images de surveillance en arrière-plan et le premier plan et classer le premier plan comme étant une personne (3) ou n'étant pas une personne.

9. Dispositif de surveillance selon l'une des revendications précédentes, **caractérisé en ce que** la zone de sécurité (5) comporte des portions d'exclusion, le module d'évaluation (8) étant conçu pour classer un objet qui est entré dans la portion d'exclusion comme n'étant pas une personne.

10. Dispositif de surveillance selon l'une des revendications précédentes, **caractérisé en ce que** le dispositif de manipulation (2) comporte une portion de mouvement qui se déplace lors de la réalisation de l'étape de manipulation, le mouvement de la portion de mouvement étant fourni par le dispositif de manipulation (2) comme données de mouvement, le dispositif de surveillance comportant une interface destinée à accepter les données de mouvement, le module d'évaluation (8) étant conçu pour classer la portion de mouvement comme n'étant pas une personne sur la base des données de mouvement.

11. Dispositif de surveillance selon l'une des revendications précédentes, **caractérisé en ce que** la zone de sécurité (5) comporte une portion de pré-alerte (14) et une portion de danger (15), l'état de fonctionnement sûr comprenant un état d'arrêt et un état lent, le module d'évaluation (8) étant conçu pour commander, lorsque l'objet pénètre dans la portion de pré-alerte (14), le dispositif de manipulation (2) pour que celui-ci passe à l'état lent et pour commander, lorsque l'objet pénètre dans la portion de danger (15), le dispositif de manutention (2) pour que celui-ci passe à l'état d'arrêt.

12. Installation industrielle (1) comprenant le dispositif de surveillance selon l'une des revendications précédentes et le dispositif de manutention (2), **caractérisée en ce que** le dispositif de surveillance est conçu pour amener le dispositif de manutention (2) dans l'état de fonctionnement sûr lors de l'entrée d'un objet.

13. Procédé de surveillance d'un dispositif de manutention (2) en termes de sécurité, **caractérisé en ce que** le dispositif de manutention est commandé pour adopter un état de fonctionnement sûr lorsqu'une première unité de détection détecte qu'un objet pénètre dans la zone de sécurité, le dispositif de manipulation étant commandé pour passer dans un état de fonctionnement si l'objet a été classé comme n'étant pas une personne,
la classification comme étant une personne et/ou n'étant pas une personne étant basée sur des données supplémentaires.

14. Logiciel comprenant des moyens pour réaliser toutes les étapes du procédé selon la revendication 13 lorsque le logiciel est exécuté sur un ordinateur et/ou sur le dispositif de surveillance selon l'une des revendications 1 à 11.
